# EUROPEAN PATENT APPLICATION

(11) **EP 3 101 058 A2**
(43) Date of publication of application: **07.12.2016**
(21) Application number: 16169583.8
(22) Date of filing: 13.05.2016
(51) Int. Cl.: C08J 5/04, C08J 5/24, B29C 70/54, B32B 5/26, B32B 27/12

(54) **FLEXIBLE THERMOPLASTIC PREPREGS**

(30) Priority: 14.05.2015 US 201514712709
(71) Applicant: Johns Manville, Denver, CO 80202 (US)
(72) Inventor: ZHANG, Mingfu, Englewood, Colorado 80112 (US); ASRAR, Jawed, Englewood, CO Colorado 80111 (US)
(74) Representative: Mai, Dörr, Besier

(57) **Abstract**

According to one embodiment, a flexible prepreg comprises a woven cloth or fabric partially coated with a polymer resin. The woven cloth or fabric has a first major surface and a second major surface that is positioned on an opposite side of the first surface. Each roving contains a bundle of fibers. A polymer resin coating is positioned atop the first surface of the woven cloth or fabric. The woven cloth or fabric is coated so that at least 30% of the fibers remain substantially free of or uncoated by the polymer resin. The polymer resin includes a thermoplastic material that melts or softens when exposed to a heating process.

## Description

### BACKGROUND

Conventional thermoplastic prepregs are prepared through impregnation of reinforcement fabrics with molten thermoplastic resins. Typically, various means, including high temperature (i.e., reduced resin viscosity), high pressure, and increased impregnation time, are used to achieve a high degree to complete or full impregnation of reinforcing fibers by the thermoplastic resin. Due to the high degree of impregnation, the resulting prepregs are typically rigid and not suitable for applications where flexibility and conformability are needed.

### BRIEF SUMMARY

The embodiments described herein provide prepregs that are partially impregnated with a thermoplastic material. The partial impregnation of the thermoplastic material within the prepreg product allows the prepreg to exhibit a substantially greater degree of flexibility when compared with conventional thermoplastic prepregs. Such prepregs may be especially useful in molding process where the prepreg is molded or formed into various shapes wherein the fibers reinforce the final product.

According to one aspect, a woven cloth or fabric that is partially impregnated with a polymer resin includes a woven cloth or fabric having a plurality of rovings that are woven together to form the woven cloth or fabric. Each of the rovings contains a bundle of continuous glass fibers and the woven cloth or fabric includes a first major surface and a second major surface that are border by a plurality of edges with the second major surface being positioned on an opposite side of the first major surface. A polymer resin is partially impregnated within the woven cloth or fabric. The polymer resin is positioned atop the first major surface of the woven cloth or fabric and penetrates through the first surface and partially into an interior of the woven cloth or fabric so that between 40% and 80% of the continuous glass fibers remain substantially free of the polymer resin. The polymer resin is a thermoplastic material that, when subjected to a subsequent heating process, migrates within the woven cloth or fabric and fully impregnates the woven cloth or fabric by wetting or contacting substantially all of the continuous glass fibers.

In some embodiments, an additional polymer resin is partially impregnated within the woven cloth or fabric. In such embodiments, the additional polymer resin is positioned atop and penetrates through the second major surface and partially into the interior of the woven cloth or fabric. In such embodiments, the continuous glass fibers of a middle layer of the woven cloth or fabric that is disposed between the first major surface and the second major surface remain substantially free of the polymer resin. The middle layer is substantially the same shape and size as the first major surface and the second major surface. In such embodiments, the 40% to 80% of continuous glass fibers that remain substantially free of the polymer resin are disposed within the middle layer. The additional polymer resin may penetrate through the second major surface and partially into the interior of the woven cloth or fabric by an amount that differs from an amount that the first polymer resin penetrates through the first major surface and partially into the interior of the woven cloth or fabric. In some embodiments, the polymer resin is only positioned atop the first major surface of the woven cloth or fabric. In some embodiments, the continuous glass fibers are sized with a coupling agent that promotes bonding between the polymer resin and the continuous glass fibers. In such embodiments, the coupling agent may include a blocked isocyanate coupling compound having a silicon-containing moiety and a blocked isocyanate moiety.

According to another aspect, a composite product may be made via a compression molding process where a plurality of flexible thermoplastic prepregs as described herein are stacked atop one another within a mold. The stacked flexible thermoplastic prepregs are then subjected to a heating and/or pressure process to melt the polymer resin of the respective flexible thermoplastic prepregs and cause the polymer resin to fully penetrate into the interior of the respective flexible thermoplastic prepregs. During the process, the stack of flexible thermoplastic prepregs conform to the shape of the mold or die. The consolidated composite is then subjected to a cooling process to form a composite part in the shape of the mold.

According to another aspect, a woven cloth or fabric having a polymer resin coating includes a plurality of rovings that are woven together to form the woven cloth or fabric. The woven cloth or fabric has a first surface and a second major surface that is positioned on an opposite side of the first surface and each roving contains a bundle of fibers. A polymer resin coating is positioned atop the first surface of the woven cloth or fabric. The woven cloth or fabric is coated so that at least 30% of the fibers remain substantially free of or uncoated by the polymer resin. The polymer resin includes a thermoplastic material that melts or softens when exposed to a heating process. The melted thermoplastic material may fully impregnate the woven cloth or fabric in a subsequent heating and/or pressure process by wetting or coating substantially all of the fibers.

In some embodiments, an additional polymer resin is positioned atop the second surface and partially impregnated within the woven cloth or fabric. The additional polymer resin may penetrate through the second surface and partially into the interior of the woven cloth or fabric so that a middle layer of the fibers remains substantially free of the polymer resin. In such embodiments, the 30% to 90% of the fibers that remain substantially free of the polymer resin are disposed within the middle layer. In other embodiments, the polymer resin is only positioned atop the first surface of the woven cloth or fabric. In some embodiments, the fibers are sized with a coupling agent that promotes bonding between the polymer resin and the fibers.

According to another aspect, a method of forming a partially impregnated woven cloth or fabric is provided. The method includes providing a plurality of rovings, where each roving containing a bundle of fibers. The method also includes weaving the plurality of rovings together to form a woven cloth or fabric having a first surface and a second surface border by a plurality of edges with the second surface positioned on an opposite side of the first surface. The method further includes applying a polymer resin atop the first surface of the woven cloth or fabric and applying pressure to the polymer resin and the woven cloth or fabric to cause the polymer resin to penetrate through the first surface and partially into an interior of the woven cloth or fabric without saturating the woven cloth or fabric. The polymer resin may penetrate partially into the interior of the woven cloth or fabric so that between 30% and 90% of the fibers remain substantially free of the polymer resin. The polymer resin includes a thermoplastic material that when subjected to a subsequent heating and/or pressure process, melts and fully penetrates into the interior of the woven cloth or fabric and thereby saturates the woven cloth or fabric so that substantially all of the fibers are wetted or coated by the polymer resin.

In some embodiments, the method additionally includes subjecting the coated woven cloth or fabric to a subsequent heating and/or pressure process to melt the polymer resin and cause the polymer resin to fully penetrate into the interior of the woven cloth or fabric and wet or coat substantially all of the fibers. In some embodiments, the method further includes: stacking a plurality of flexible thermoplastic prepregs atop one another within a mold; subjecting the stack of flexible thermoplastic prepregs to a heating and/or pressure process to melt the polymer resin of the respective flexible thermoplastic prepregs and cause the polymer resin to fully penetrate into the interior of the respective flexible thermoplastic prepregs, wherein the stack of flexible thermoplastic prepregs conforms to the shape of the mold. The consolidated composite is then subjected to a cooling process to form a composite part in the shape of the mold. The subsequent heating and/or pressure process may be a compression molding process.

In some embodiments, the polymer resin may be applied atop the first surface of the woven cloth or fabric by extruding a liquid or molten polymer resin atop the first surface. In other embodiments, the polymer resin may be applied atop the first surface of the woven cloth or fabric by positioning a polymer film sheet atop the first major surface and subjecting the polymer film sheet to a heating and/or pressure process.

In some embodiments, the method additionally includes applying an additional polymer resin atop the second surface of the woven cloth or fabric and applying heat and/or pressure to the additional polymer resin and the woven cloth or fabric to cause the additional polymer resin to penetrate through the second surface and partially into the interior of the woven cloth or fabric without saturating the woven cloth or fabric. In such embodiments, pressure is applied to the polymer resin, the woven cloth or fabric, and the additional layer so that a middle layer of the woven cloth or fabric that is disposed between the first surface and the second surface remains substantially free of the polymer resin. The middle layer may be substantially the same shape and size as the first surface and the second surface. In some embodiments, the method additionally includes sizing the fibers with a coupling agent that promotes bonding between the polymer resin and the fibers.

### BRIEF DESCRIPTION OF THE DRAWINGS

The present technology is described in conjunction with the appended figures:
**FIG. 1** illustrates an embodiment of a woven fabric or cloth.
**FIG. 2A** illustrates an embodiment of stitched fabric or cloth.
**FIG. 2B** illustrates an embodiment of a nonwoven fiber mat.
**FIG. 3** illustrates an embodiment of a woven cloth or fabric and/or nonwoven fiber mat that is partially impregnated with a polymer resin.
**FIG. 4** illustrates a flexible prepreg having a polymer resin coating on one surface of a woven cloth or fabric.
**FIG. 5** illustrates another flexible prepreg having a polymer resin coating on opposite surfaces of a woven cloth or fabric.
**FIG. 6A** illustrates a method of forming a partially impregnated woven cloth or fabric, or a partially impregnated nonwoven fiber mat.
**FIG. 6B** illustrates a method of forming a composite product from flexible thermoplastic prepregs.
**FIG. 7** illustrates a drapability test that was performed to measure the flexibility of several coated woven cloths or fabrics.

In the appended figures, similar components and/or features may have the same numerical reference label. Further, various components of the same type may be distinguished by following the reference label by a letter that distinguishes among the similar components and/or features. If only the first numerical reference label is used in the specification, the description is applicable to any one of the similar components and/or features having the same first numerical reference label irrespective of the letter suffix.

### DETAILED DESCRIPTION

The embodiments described herein relate to woven fabrics or cloths that are partially impregnated with a thermoplastic polymer material, such as a polymer resin. The partial impregnation of the polymer material enables the woven fabrics or cloths to remain relatively flexible so that the woven fabrics or cloths may be easily molded or formed into various intricate shapes. The partial impregnation of the polymer material also enables the polymer material to easily fully saturate or penetrate into the woven fabrics or cloths upon a subsequent application of heat and/or pressure to the woven fabrics or cloths. The full saturation or penetration of the polymer material into the woven fabrics or cloths allows substantially all of the fibers that make up the woven fabrics or cloths to be wetted or contacted by the polymer material, which is important for ensuring that loads are properly transferred to the individual fibers. The partially impregnated woven fabrics or cloths may also be referred to as partially impregnated thermoplastic prepregs, partially impregnated prepregs, or more simply prepregs.

In some embodiments, the partial impregnation of the polymer material may be achieved through surface coating of reinforcement fabrics with thermoplastic resins. The surface coating can be achieved through extrusion coating of molten thermoplastic resins on moving fabrics at a speed at which molten resins are applied on the surface of fabrics with minimal impregnation. In other embodiments, thermoplastic resin powders can be sprinkled onto moving fabrics, and melted in oven to coat the surface fabrics with minimal impregnation. In yet another embodiment, a thermoplastic polymer film may be positioned atop a surface of the fabrics and melted in oven to coat the surface fabrics with minimal impregnation. Calendaring may be used to increase the spread of resins on the surfaces of fabrics and produce uniformly coated prepregs. Coating can be applied on either one side or both sides of fabrics as described herein. The prepregs may be made from a wide variety of thermoplastic polymers and with a range of reinforcing fabrics. For example, the reinforcement fabrics may include, but are not limited to, woven fabrics, multiaxial fabrics, stitched fabrics, and non-woven fiber mats.

Several advantages are achieved from the partially impregnated thermoplastic prepregs described herein. Among the various advantages, the following will be readily apparent to those of skill in the art: i) surface coating/partial impregnation enables the resulting prepregs to be flexible and conformable; ii) the surface coating/partial impregnation improves the processability of fabrics or mats for downstream processing (e.g., reduced fuzz, minimal misalignment of reinforcing fibers, etc.); and/or iii) reduced production cost due to the higher coating speed than conventional prepregs. For ease in describing the embodiments herein, the polymer/thermoplastic material will generally be referred to herein as a polymer material or resin. Similarly, for ease in describing the embodiments herein, the reinforced fabric will be referred to as a fabric or cloth or a woven fabric or cloth.

The term roving as used herein refers to a bundle of fibers that are positioned adjacent one another to form a rope, thread, or cord like component. A common type of fiber that is used in the rovings is glass fibers, although various other fibers could be used such as carbon fibers, aramid fibers, basalt fibers, metal fibers, ceramic fiber, natural fibers, synthetic organic fibers, and other inorganic fibers. The term reinforcement fabric or cloth (or simply fabric or cloth) as used herein refers to the material that is produced by weaving multiple roving strands together. The roving strands are commonly woven so that a first plurality of strands extend in a first direction (e.g., weft direction) and a second plurality of strands extend in a second direction that is typically orthogonal to the first direction (e.g., warp direction). The first plurality of strands are roughly parallel with one another as are the second plurality of strands. The fabric or cloths described herein may be unidirectional, where all or most of the roving strands run or extend in the same direction, or may be bidirectional, wherein the roving strands run in two, typically orthogonal, directions. Various weaves may be used to form the fabric or cloths described herein, including: plain weaves, twill weaves, satin weaves, multiaxial weaves, or stitching.

In some embodiments, nonwoven fiber mats are used in addition to or in place of the woven reinforcement mats. The nonwoven fiber mats are commonly formed of fibers that are entangled or meshed together rather than being woven in a uniform direction. The nonwoven fiber mats exhibit more uniform strength characteristics in comparison to the woven reinforcement mats. Stated differently, the strength of the nonwoven fibers mats is typically less directionally dependent so that a more uniform strength is achieved regardless of which direction the mat is tensioned. In comparison, the strength of the woven reinforcement mats are directionally dependent whereby the fabrics or cloths exhibit substantially more strength in a direction aligned with the fibers and less strength in a direction misaligned from the fibers. The reinforcement fabrics or cloths are substantially stronger than the nonwoven mats when the tension is aligned with the fibers.

The fibers used in woven fabrics or nonwoven fiber mats may be treated with a sizing composition including coupling agent(s) that promote bonding between reinforcing fibers and polymer resin. For example, the fibers may be sized with one or more coupling agents that covalently bond the thermoplastic resin to the fibers. Exemplary coupling agents may include blocked isocyanate coupling compounds having a silicon-containing moiety and a blocked isocyanate moiety. These blocked isocyanate coupling compounds may include carboxamide compounds, carbamate compounds, and isocyanurate compounds, among others. Specific examples of carboxamide compounds include 2-oxo-N-(3-(triethoxysilyl)propyl)azepane-1-carboxamide. Specific examples of carbamate compounds include triethoxysilylpropylethyl carbamate and (3-triethoxysilylpropyl)-t-butyl carbamate. Specific examples of isocyanurate compounds include tris(3-trimethoxysilylpropyl) isocyanurate.

When the glass fibers that are sized with one or more blocked isocyanate coupling compounds are exposed to deblocking conditions (e.g., elevated temperatures), the blocked isocyanate group may become deblocked to form the active isocyanate group. The active isocyanate group may react with thermoplastic polymers, such as polyamides. The bonding between the fibers and thermoplastic resin provided by the coupling agent increases the mechanical properties of fiber-reinforced composites made with the flexible prepregs of the instant invention.

The term polymer material or resin as used herein refers to thermoplastic material rather than thermoset materials. Unlike thermoset materials , the thermoplastic materials are capable of being melted and molded or formed into various shapes multiple times. As such, the partially impregnated prepregs may be positioned in a mold and reformed or remolded into various desired shapes. The thermoplastic materials also allow the polymer material or resin to migrate into the reinforcement fabrics or cloths during the subsequent molding process and wet, contact, or saturate the individual fibers with which the reinforcement fabrics or cloths are made. Examples of polymer materials or resins that may be used with the embodiments herein include, but not limited to, polyolefins, polyamides, polyesters, polycarbonates, polyketones, polyimides, polyethers, polysulfides, thermoplastic polyurethanes, polyacetals, polyacrylates, polymethacrylates, and polyvinyl chloride.

As used herein, the polymer resin or material being partially saturated or impregnated within the reinforcement fabrics or cloths means that the polymer resin or material wets or contacts some of the individual fibers, but not all of the individual fibers. Stated differently, partial saturation or impregnation of the polymer material/resin means the after the coating of the polymer material/resin on the reinforcement fabrics or cloths, some of the individual fibers remain uncoated, non-wetted, or are otherwise free of the polymer material/resin.

The description and/or claims herein may use relative terms in describing features or aspects of the embodiments. For example, the description and/or claims may use terms such as relatively, about, substantially, between, approximately, and the like. These relative terms are meant to account for deviations that may result in practicing and/or producing the embodiments described herein. For example, the description and/or claims describe between 40% and 80% of the fibers remaining substantially free of a polymer resin. The term "substantially" and "between" is used to account for small deviations or differences from an entirely non-coated or non-wetted fiber strand. For example, it should be appreciated that given the relatively long lengths of the fibers and/or the intricate weaves of the fabrics or cloths, some portion of many of the fibers may be coated or wetted by the polymer resin while a majority or most of the fibers remain non-coated or non-wetted. Thus, these fibers are "substantially free of a polymer resin". These deviations of differences may be up to about 30 or 40%, but in many embodiments are typically less than 20%, 10%, or 5%. A similar rationale applies to any of the other relative terms used herein.

Conventional prepregs are typically fully impregnated or saturated with a polymer resin or thermoplastic material so that substantially all of the roving or fiber strands are wetted or contacted by the polymer/thermoplastic material. The polymer/thermoplastic material may be a liquid or powder material, but in either instance full impregnation or saturation of the woven fabric is typically achieved. The process of fully impregnating or saturating the reinforcement fabric may be a rather expensive and/or difficult task due to the high melt viscosity of the polymer/thermoplastic material. In some instances, a solvent is added to the polymer resin/thermoplastic material to reduce the viscosity of the material. While the reduced viscosity may add in fully impregnating the reinforcement fabric, the solvent needs to be subsequently removed from the fabric after the polymer resin/thermoplastic material is impregnated within the fabric. Removal of the solvent commonly involves heating the fabric to evaporate the solvent.

The fully impregnated reinforcement fabric are often relatively stiff and rigid in comparison to the non-impregnated fabric. The increased stiffness and rigidity makes molding or forming more difficult, especially when the prepreg needs to be formed or molded into complex and/or intricate shapes (e.g., small radii or other feature).

Other conventional technologies use pre-impregnated tapes of polymer resin and reinforcing fibers. These tapes are typically manufactured as a single layer by applying a molten polymer resin atop flatten rovings. For example, glass fibers may be passed over rollers that are coated with a molten polymer resin. The tapes are then cooled with the glass fibers encased within the hardened polymer resin material. The tapes may then be used in producing other products, typically by stacking several layers of tape together and molding the tape stack. The stacked tape is often rigid due to the polymer resin that impregnates the tape layers, which makes it difficult to mold intricate shapes.

In the embodiments described herein, the polymer resin is partially impregnated within the woven fabric or cloth. Upon application of heat and/or pressure in a subsequent process, the polymer resin may migrate into the interior of the woven fabric or cloth and fully impregnate or saturate the woven fabric or cloth. For example, the impregnation of the woven fabric or cloth may occur during a compression molding of the partially impregnated woven fabric or cloth. In such instances, the polymer resin melts and penetrates, migrates, or saturates into the woven fabric or cloth during the molding process. Full impregnation or saturation of the woven fabric or cloth with the polymer resin is important to ensure that any loads that are placed on the composite are properly transferred from the resin to the reinforcing fibers. Since the woven fabric or cloth is only partially impregnated with the polymer resin prior to the molding process, the fabric or cloth is relatively flexible compared with conventional prepregs that are fully saturated with a polymer resin.

As briefly described above, the polymer resin may only partially penetrate or impregnate a top and/or bottom layer of the woven fabric or cloth. Because the polymer resin penetrates into the top and/or bottom layer of the woven fabric or cloth, the distance that the polymer resin needs to travel to fully impregnate the woven fabric or cloth and wet the non-wetted fibers is minimal. As such, the overall process of molding the partially impregnated woven fabric or cloth and wetting substantially all of the individual fibers is reduced. The polymer material that is positioned atop the top and/or bottom surface of the woven fabric or cloth and partially impregnated therein is sufficient to fully impregnate the woven mat after an application of heat and/or pressure in a subsequent process such as compression molding.

An additional advantage of the prepreg described herein is that the partial impregnation of the polymer resin occurs after the rovings are woven together to form the woven fabric or cloth. Stated differently, the rovings are woven together to form the woven fabric or cloth before the polymer resin is partially impregnated within the top and/or bottom surface of the woven fabric or cloth. Because the rovings are free of the polymer resin until after the woven fabric or cloth is formed, it is significantly easier to weave the rovings together. Stated differently, because the rovings are free of the polymer resin, the rovings are more flexible and easier to weave with other roving strands. As such, the use of uncoated roving strands enables more intricate and/or complex weave patterns to be formed. The partially impregnated woven fabric or cloth also reduces waste in a subsequent molding process because cutting of separate polymer sheet materials and woven fabrics or cloths is not required. Rather, the only cutting that may be needed is cutting of the partially impregnated woven fabric or cloth.

Having described several aspects of the embodiments generally, additional aspects and features will be realized with references to the description of the several drawings provided herein below.

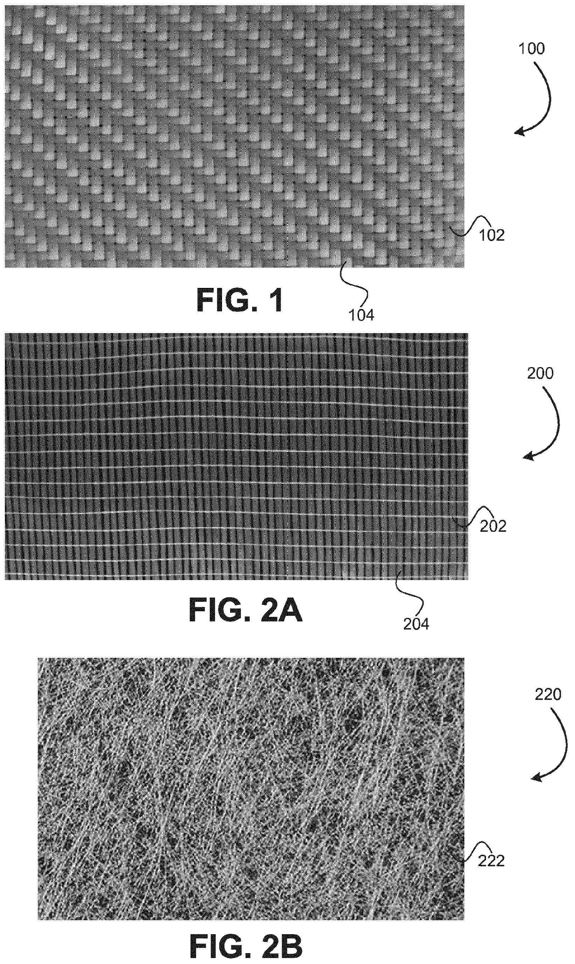

Referring now to FIG. 1, illustrated is an embodiment of a woven fabric or cloth 100. The woven fabric or cloth 100 is made of roving strands that are woven together to form the woven fabric or cloth 100. Specifically, a first plurality of rovings/strands 102 are woven with a second plurality of rovings/strands 104. The first plurality of rovings/strands 102 extend in a first direction (e.g., weft direction) and the second plurality of rovings/strands 104 extend in a second direction that is orthogonal to the first direction (e.g., warp direction). The first plurality of rovings/strands 102 are roughly parallel with one another as are the second plurality of rovings/strands 104. The woven fabric or cloth 100 illustrated in FIG. 1 represents a bidirectional weave wherein the rovings/strands run in two directions. The woven fabric or cloth 100 exhibits the greatest strength in the two directions that are aligned with the first plurality of rovings/strands 102 and the second plurality of rovings/strands 104.

The weave of the woven fabric or cloth 100 may be a plain weave, twill weave, satin weave, and the like. The first plurality of rovings/strands 102 and the second plurality of rovings/strands 104 may have an equal number of individual fibers or an unequal number of fibers depending on the application of the woven fabric or cloth 100 and/or for any other desired reason. The individual fibers of the rovings/strands may be glass fibers, carbon fibers, aramid fibers, basalt fibers, ceramic fibers, metal fibers, and the like, or any combination thereof. The weave of the woven fabric or cloth 100 may be rather tight or loose depending on the flexibility that is desired in the woven fabric or cloth 100.

Referring now to FIG. 2A, illustrated is an embodiment of another woven fabric or cloth 200. The woven fabric or cloth 200 is made of a plurality of rovings/strands 204 that are stitched together via stitching threads 202. The plurality of rovings/strands 204 are roughly parallel with one another and are held together, or otherwise maintained in a roughly parallel relationship, via the stitching threads 204, which are stitched through the plurality of rovings/strands 204 in an orthogonal direction. The woven fabric or cloth 200 illustrated in FIG. 2A represents a unidirectional weave wherein the rovings/strands 204 run in a single direction. The woven fabric or cloth 200 exhibits its greatest strength in the direction aligned with the plurality of rovings/strands 202. The stitching threads 202 do not exhibit considerable strength in relation to the plurality of rovings/strands 202. As described above, the plurality of rovings/strands 204 and/or stitching threads 202 may comprises various types of fibers.

Referring now to FIG. 2B, illustrated is an embodiment of a nonwoven fiber mat 220. The nonwoven fiber mat 220 is made of a plurality of entangled fibers 222. The entangled fibers 222 have a random orientation within the nonwoven fiber mat 220. Because of the random orientation of the entangled fibers, the strength of the nonwoven fiber mat 220 is not as dependent on a direction of tension as are the fabrics or cloths of FIGS. 1 and 2A. Stated differently, the strength of the nonwoven fiber mat 220 is more uniform regardless of how the mat is tensioned, although the nonwoven fiber mat 220 is typically not as strong as the cloths of FIGS. 1 and 2A. Because of the more uniform nature of the nonwoven fiber mat's strength, in some embodiments the mat may be coupled with the cloth of FIGS. 1 or 2A to reinforce those cloths. The entangled fibers 222 may comprises various types of fibers as described herein.

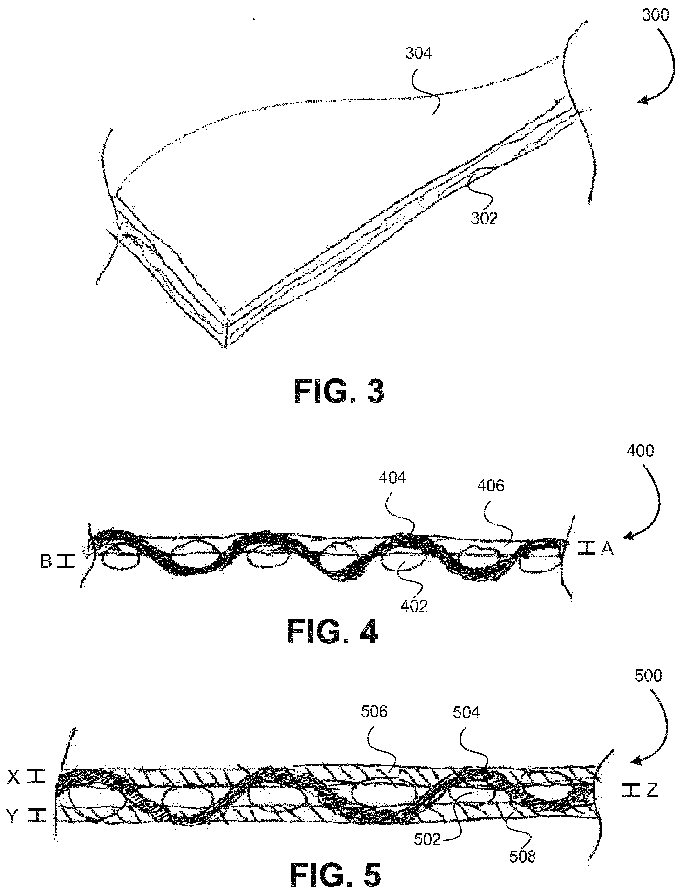

Referring now to FIG. 3, illustrated is an embodiment of a woven cloth or fabric and/or nonwoven fiber mat 300 that is partially impregnated with a polymer resin. For ease in describing the embodiment, the woven cloth or fabric and/or nonwoven fiber mat 300 will be referred to as a woven cloth or fabric 300. The woven cloth or fabric 300 includes a cloth or fabric body 302 that in one embodiment is made of a plurality of rovings that are woven together to form the cloth or fabric body 302. As described above, each roving contains a bundle of fibers, such as continuous glass fibers, chopped strand glass fibers, carbon fibers, aramid fibers, basalt fibers, ceramic fibers, metal fibers, and the like. The cloth or fabric body 302 may have a similar arrangement as the cloths or fabrics shown in FIGS. 1 and 2A. In such embodiments, the cloth or fabric body 302 has a first major surface and a second major surface that are border by a plurality of edges. The second major surface is positioned on an opposite side of the first major surface.

In other embodiments, the body 302 may be a nonwoven fiber mat and may have an arrangement similar to the nonwoven fiber mat illustrated in FIG. 2B. In yet another embodiment, the body 302 may be a combination of a woven cloth or fabric and a nonwoven fiber mat. In such instances, the body 302 may include one or more layers of the woven cloth or fabric and the nonwoven fiber mat. A binder may be used to bond the woven cloth or fabric and the nonwoven fiber mat.

The woven cloth or fabric 300 also includes a polymer material, such as a polymer resin 304, that is positioned atop the first major surface of the body 302. The polymer resin 304 penetrates through the first surface and partially into an interior of the body 302. The polymer resin 304 does not penetrate fully into or through the body 302. For example, the polymer resin penetrates only partially into the interior of the body so that in some embodiments between 40% and 80% of the fibers of the rovings (e.g., continuous glass fibers) remain substantially free of or uncoated by the polymer resin. In this manner, the polymer resin 304 partially impregnates within the body cloth or fabric body 302.

As described herein, the polymer resin is a thermoplastic material. As such, when the cloth or fabric body 302 is subjected to a subsequent heating and/or pressure process, the polymer resin 304 migrates within the cloth or fabric body 302 and thereby fully impregnates the cloth or fabric body 302. The polymer material 304 fully impregnates the cloth or fabric body 302 by wetting or contacting substantially all of the fibers of the rovings.

As described above, in some embodiments the body 302 is a nonwoven fiber mat. In such embodiments, the polymer resin 304 partially penetrates into the nonwoven fiber mat so that the nonwoven fiber mat is partially impregnated with the polymer resin 304. In such embodiments, between 40% and 80% of the fibers of the mat (e.g., glass fibers) may remain substantially free of or uncoated by the polymer resin 304. In embodiments where a nonwoven fiber mat is combined with a woven fabric or cloth, the polymer material may partially or fully impregnate either the nonwoven fiber mat or the woven fabric or cloth. For example, the nonwoven fiber mat may be positioned atop the woven fabric or cloth and may be partially or fully impregnated by the polymer resin or vice versa. In such instances, the woven fabric or cloth (or nonwoven fiber mat) may be mostly, substantially, or entirely free of, or uncoated by, the polymer resin. In other instances, the polymer material may fully impregnate the nonwoven fiber mat (or the woven fabric or cloth) and partially penetrate into the woven fabric or cloth (or the nonwoven fiber mat). In any instance, either the woven fabric/cloth or the nonwoven fiber mat remains at least partially free or uncoated by the polymer material.

Referring now to FIG. 4, illustrated is a flexible prepreg 400 having a polymer resin coating. In one embodiment, the flexible prepreg 400 includes a plurality of rovings, 402 and 404, that are woven together to form a woven cloth or fabric. Each roving, 402 and 404, contains a bundle of fibers, such as glass fibers, carbon fibers, aramid fibers, basalt fibers, ceramic fibers, metal fibers, or a combination thereof. In such embodiments, the woven cloth or fabric defines a first major surface (e.g., top surface) and a second major surface (e.g., bottom surface) that are border by a plurality of edges with the second major surface positioned on an opposite side of the first major surface.

In other embodiments, the flexible prepreg 400 is a nonwoven fiber mat having a plurality of entangled and randomly oriented fibers. As with the woven fabric or cloth, the nonwoven fiber mat defines a first major surface (e.g., top surface) and a second major surface (e.g., bottom surface) that are border by a plurality of edges with the second major surface positioned on an opposite side of the first major surface.

In either embodiment, the flexible prepreg 400 also includes a polymer resin coating 406 atop the first major surface of the woven cloth or fabric or nonwoven fiber mat. The woven cloth or fabric or nonwoven fiber mat is coated with the polymer material or resin 406 such that at least 30% of the fibers remain substantially free of or uncoated by the polymer resin/material. More commonly, the woven cloth or fabric or nonwoven fiber mat is coated so that at least 50% or 70% of the fibers remain substantially free of or uncoated by the polymer resin/material 406. In an exemplary embodiment, the woven cloth or fabric or nonwoven fiber mat is coated so that at least 80% or 90% of the fibers remain substantially free of or uncoated by the polymer resin/material 406.

The polymer resin coating 406 may partially impregnate within the woven cloth or fabric by partially penetrating through the first surface (e.g., top surface) and into an interior of the woven cloth or fabric. For example, FIG. 4 illustrates the polymer resin coating 406 penetrating into the interior of the woven cloth or fabric by a distance A. As illustrated, the polymer resin coating 406 does not fully penetrate into or through the woven cloth or fabric/nonwoven fiber mat so that a bottom layer or portion B remains free or uncoated by the polymer resin coating 406. The bottom layer or portion B may represent at least 30% of the fibers, or at least 50%, 70%, 80%, or 90% of the fibers depending on the depth of penetration A of the polymer resin coating 406. As is easily understood, the greater the depth of penetration A of the polymer resin coating 406, the greater wetted or coated the fibers of the woven cloth or fabric/nonwoven fiber mat will be.

The polymer resin coating 406 comprises a thermoplastic material that melts or softens when exposed to a heating process so that the polymer resin coating 406 may fully penetrate within the woven cloth or fabric/nonwoven fiber mat in a subsequent process by wetting or coating substantially all of the fibers. As illustrated in FIG. 4, the polymer resin coating is only positioned atop the first major surface (e.g., top surface) of the woven cloth or fabric/nonwoven fiber mat.

Referring now to FIG. 5, illustrated is another flexible prepreg 500 having a polymer resin coating on both surfaces. The flexible prepreg 500 may include a plurality of rovings, 502 and 504, that are woven together to form a woven cloth or fabric, or may include a plurality of entangled and randomly oriented fibers that form a nonwoven fiber mat. The woven cloth or fabric/nonwoven fiber mat may define a first major surface (e.g., top surface) and a second major surface (e.g., bottom surface) that are border by a plurality of edges with the second major surface positioned on an opposite side of the first major surface.

The flexible prepreg 500 includes a first polymer resin coating 506 atop the first major surface of the woven cloth or fabric/nonwoven fiber mat and a second polymer resin coating 508 atop the second major surface of the woven cloth or fabric/nonwoven fiber mat. As illustrated in FIG. 5, a middle layer of the fibers that is disposed between the first major surface and the second major surface remains substantially free of or uncoated by the polymer resin/material. The middle layer is substantially the same shape and size as the first major surface and the second major surface. The woven cloth or fabric/nonwoven fiber mat is coated with the polymer resin, 506 and 508, such that at least 30% of the fibers remain substantially free of or uncoated by the polymer resin, 506 and 508. More commonly, the woven cloth or fabric/nonwoven fiber mat is coated so that at least 50% or 70% of the fibers remain substantially free of or uncoated by the polymer resin, 506 and 508. In an exemplary embodiment, the woven cloth or fabric/nonwoven fiber mat is coated so that at least 80% or 90% of the fibers remain substantially free of or uncoated by the polymer resin/material, 506 and 508.

The first polymer resin coating 506 partially penetrates through the first surface (e.g., top surface) and into an interior of the woven cloth or fabric/nonwoven fiber mat. Similarly, the second polymer resin coating 508 partially penetrates through the second surface (e.g., bottom surface) and into an interior of the woven cloth or fabric/nonwoven fiber mat. For example, FIG. 5 illustrates the first polymer resin coating 506 penetrating into the interior of the woven cloth or fabric/nonwoven fiber mat by a distance X and the second polymer resin coating 508 penetrating into the interior of the woven cloth or fabric/nonwoven fiber mat by a distance Y. Neither polymer resin coating fully penetrates into the woven cloth or fabric/nonwoven fiber mat so that a middle layer Z remains free or uncoated by the polymer resin coatings, 506 and 508. The middle layer or portion Z represents at least 30% of the fibers, or at least 50%, 70%, 80%, or 90% of the fibers depending on the depths of penetration, X and Y, of the polymer resin coatings, 506 and 508.

The depths of penetration, X and Y, of the polymer resin coatings, 506 and 508, may be substantially the same, or may vary depending on the application, processing parameters, or desired arrangement of the woven cloth or fabric/nonwoven fiber mat. The polymer resin coatings, 506 and 508, comprise a thermoplastic material that melts or softens when exposed to a subsequent heating process so that the polymer resin coatings, 506 and 508, fully penetrate within the middle layer Z of the woven cloth or fabric/nonwoven fiber mat and thereby fully impregnate the woven cloth or fabric/nonwoven fiber mat by wetting or coating substantially all of the fibers.

Since the middle layer Z in FIG. 5 and the bottom layer B in FIG. 4 of the woven cloth or fabric/nonwoven fiber mat remain free of the polymer resin coating, the woven cloth or fabric/nonwoven fiber mat is substantially more flexible than conventional prepregs wherein the cloth or mat is fully impregnated by a polymer resin/material.

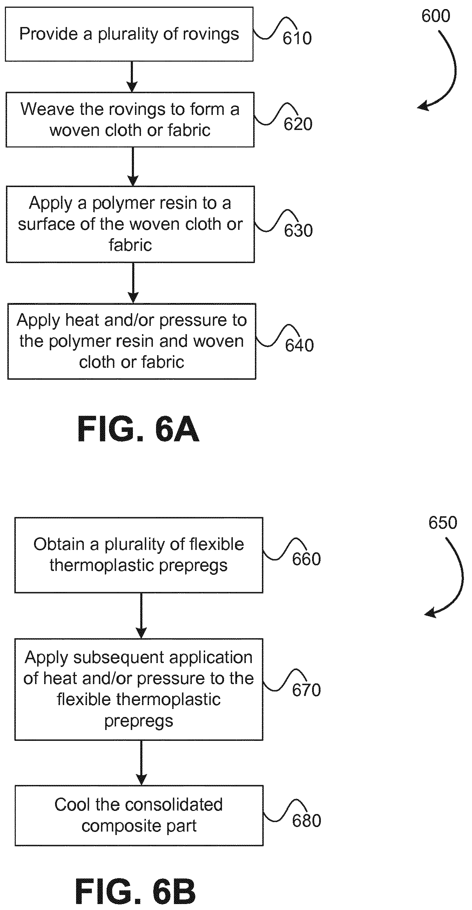

Referring now to FIG. 6A, illustrated is a method 600 of forming a partially impregnated woven cloth or fabric. Although the method 600 refers generally to forming prepregs based on woven cloths or fabric, it should be realized that in other embodiments a partially impregnated nonwoven fiber mat may be formed using one or more of the method steps provided in the described method 600.

At block 610, a plurality of rovings are provided. Each of the rovings contains a bundle of fibers. In nonwoven fiber mat embodiments, a plurality of individual fibers is provided rather than the fiber rovings. At block 620, the plurality of rovings are woven together to form a woven cloth or fabric. The woven cloth or fabric has a first major surface and a second major surface that are border by a plurality of edges with the second major surface positioned on an opposite side of the first major surface. In nonwoven fiber mat embodiments, the plurality of individual fibers are arranged in a random fashion to form the fiber mat. The nonwoven fiber mat includes a first and second surface as described above.

At block 630, a polymer resin is applied atop the first major surface of the woven cloth or fabric (or nonwoven fiber mat). In one embodiment, applying the polymer resin atop the woven cloth or fabric includes extruding a liquid or molten polymer resin atop the first major surface of the woven cloth or fabric. The liquid or molten polymer resin may be extruded atop a moving woven cloth or fabric via a coating die. In other embodiments, applying the polymer resin atop the woven cloth or fabric includes positioning a polymer film sheet atop the first major surface and subjecting the polymer film sheet and woven cloth or fabric to a heating and/or pressure process, such as by passing the polymer film sheet and woven cloth or fabric through an oven or between a pair of heated rollers. In yet another embodiment, applying the polymer resin atop the woven cloth or fabric includes applying thermoplastic resin powders onto a moving woven cloth or fabric and melting the thermoplastic resin powders by subjecting the thermoplastic resin powders and woven cloth or fabric to an oven or pair of heated rollers. The melted thermoplastic resin powders or thermoplastic film sheet coat the surface of the woven cloth or fabric with minimal impregnation into the interior of the cloth or fabric. The amount of impregnation of the polymer resin within the woven cloth or fabric may be controlled by varying a speed of the woven cloth or fabric in relation to the extruder, thermoplastic powder coater, of polymer film sheet application machine. Similar method may be used to coat a nonwoven fiber mat.

At block 640, heat and/or pressure is applied to the polymer resin and the woven cloth or fabric to cause the polymer resin to partially penetrate through the first surface and partially into an interior of the woven cloth or fabric without saturating the woven cloth or fabric. When extrusion coating is used, the molten or liquid material may penetrate into the woven cloth or fabric to some degree without the additional application of pressure. In some embodiments, heat may be applied to melt the thermoplastic material, such as when a polymer film sheet or polymer powders are employed. Pressure and/or heat may similarly be applied to a nonwoven fiber mat.

In some embodiments, the polymer resin penetrates into the woven cloth or fabric so that that between 30% and 90% of the fibers remain substantially free of the polymer resin. In other embodiments, at least 50%, at least 70%, or at least 80% of the fibers remain substantially free of or uncoated by the polymer resin. In an exemplary embodiment, at least 80% of the fibers remain substantially free of or uncoated by the polymer resin. As described herein, the polymer resin comprises a thermoplastic material such that when the woven cloth or fabric is subjected to a subsequent heating and/or pressure process, the polymer resin melts and fully penetrates into an interior of the woven cloth or fabric and saturates the woven cloth or fabric. As such, after the subsequent heating and/or pressure process, substantially all of the fibers are wetted or coated by the polymer resin.

In some embodiments, blocks 630 and 640 may also include applying a second or additional polymer resin atop the second major surface of the woven cloth or fabric and applying pressure to the second polymer resin and the woven cloth or fabric to cause the second polymer resin to penetrate through the second major surface and partially into the interior of the woven cloth or fabric without saturating the woven cloth or fabric. The application of the second polymer resin and the pressure applied to the second polymer resin may be performed simultaneously with the application of the first polymer resin or in a step separate therefrom.

In embodiments where a second polymer resin is applied to the woven cloth or fabric, the heat and/or pressure is applied to the polymer resins and the woven cloth or fabric so that a middle layer of the woven cloth or fabric between the first major surface and the second major surface remains substantially free of the polymer resin. The middle layer may be substantially the same shape and size as the first major surface and the second major surface. Stated differently, the polymer material is partially impregnated within the first surface and the second surface, but is not present within, or otherwise absent from, a middle layer of the woven cloth or fabric. Because the polymer resin material is absent from the middle layer of the woven fiber mat, the cloth or fabric remains flexible and easily conformable, which is ideal for subsequent molding or forming processes. Block 640 may likewise be applied to nonwoven fiber mats and/or a second polymer resin may be applied to the nonwoven fiber mat.

Referring now to FIG. 6B, illustrated is a method 650 of forming a composite product from flexible thermoplastic prepregs or partially impregnated woven cloths or fabrics. At block 660, a plurality of flexible thermoplastic prepregs or partially impregnated woven cloths or fabrics are obtained. The plurality of flexible thermoplastic prepregs may be stacked atop one another within a mold. At block 670, the stack of flexible thermoplastic prepregs is subjected to a subsequent heating and/or pressure process to melt the polymer resin of the respective flexible thermoplastic prepregs and thereby cause the polymer resin to fully penetrate into the interior of the respective flexible thermoplastic prepregs. The re-melted polymer resin penetrates into the interior of the woven cloth or fabric to wet or coat substantially all of the fibers and the stack of flexible thermoplastic prepregs conforms to the shape of the mold or die. At block 680, the consolidated composite is cooled and thereby forms a molded composite part in the shape of the mold.

In some embodiments, the subsequent heating and/or pressure process of block 670 and/or cooling process of block 680 comprises a compression molding process wherein the flexible thermoplastic prepregs are molded or formed into a desired shape. Given the flexible characteristics of the flexible thermoplastic prepregs, relatively intricate shapes may be formed or molded from the flexible thermoplastic prepregs.

### Examples

A partially impregnated woven cloth or fabric was prepared according to the embodiments described herein. A more fully impregnated woven cloth or fabric was prepared for comparison. The drapability of both materials was compared to show the increased flexibility of the partially impregnated woven cloth or fabric. The woven cloth or fabric that was used for both samples was a fiberglass woven fabric - HexForce® 7500 plain weave fabric manufactured by Hexcel Corporation. The fiberglass woven fabric had an area weight of 310 g/m². The polymer resin that was used was a nylon 6,6 resin film-Zytel® NC010 film manufactured by DuPont. The resin film had an area weight of 115 g/m².

Example 1: a first sample was prepared by cutting a 10" x 10" woven glass fabric and a 10" x 10" Nylon 6,6 film. The woven glass fabric was stacked on top of the Nylon 6,6 film and the glass fabric/Nylon film was placed between two Teflon release papers. The glass fabric/Nylon film and release papers were positioned inside a press and the stack was pressed for approximately 2.5 minutes under a pressure of 150 bar at a temperature of 250°C. The stack was then removed from the press and the coated woven glass fabric was allowed to cool under ambient condition. The applied pressure and temperature resulted in a partial impregnation of the resin material into the glass fabric in accordance with the embodiments described herein. Stated differently, the applied pressure and temperature resulted in the resin material coating on the surface of the glass fabric. As illustrated in Table 1 below, the coated glass fabric exhibits substantial flexibility (i.e., a drapability of 4.5 inches). The flexibility is due to the impregnation of the Nylon 6,6 resin within only the surface of the glass fabric.

Example 2: a second sample was also prepared by cutting a 10" x 10" woven glass fabric and a 10" x 10" Nylon 6,6 film. The woven glass fabric was stacked on top of Nylon 6,6 film and the glass fabric/Nylon film was positioned between two Teflon release papers. The stack was then positioned inside a press and the stack was pressed for approximately 2.5 minutes under the pressure of 150 bar and temperature of 270°C. The stack was then removed from the press and the coated woven glass fabric was allowed to cool down under ambient conditions. The applied pressure and temperature resulted in a significantly greater degree of impregnation of the resin material into the glass fabric. As illustrated in Table 1 below, the more fully impregnated glass fabric exhibits substantially more rigidity (i.e., a drapability of 0.0 inches), which is due to the higher degree of impregnation of the Nylon 6,6 resin within the glass fabric.

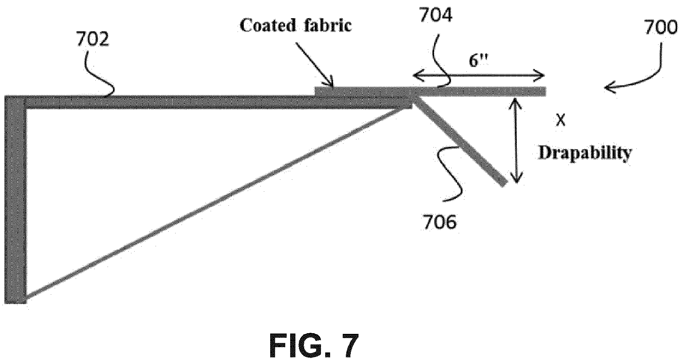

The drapability tests that were performed is illustrated in FIG. 7. In performing the drapability test 700, the coated glass fabrics 704 of samples 1 and 2 (i.e., Examples 1 & 2 in Table 1) were positioned on an edge of a metal plate 702 with 6 inches of the respective coated fabric 704 extending out over the edge of the metal plate 702. A sagging or flexing of the coated fabric 704 was measured. The distance X of sagging or flexing was recorded and is representative of the drapability of the respective coated fabric 704. A higher drapability indicates a greater flexibility of the coated fabric 704.

**Table 1: drapability of two woven cloth samples.**

| Example No. | Press Temperature (°C) | Press Pressure (bar) | Press Time (min) | Drapability (inch) |
|---|---|---|---|---|
| 1 | 250 | 150 | 2.5 | 4.5 |
| 2 | 270 | 150 | 2.5 | 0.0 |

Having described several examples, it will be recognized by those of skill in the art that various modifications, alternative constructions, and equivalents may be used without departing from the spirit of the invention. Additionally, a number of well-known processes and elements have not been described in order to avoid unnecessarily obscuring the present invention. Additionally, details of any specific example may not always be present in variations of that example or may be added to other examples.

Example 3: An extrusion coating was used to coat the surface of a moving woven glass fabric with molten polymer resin. Nylon 6,6 resin was melted in the extruder and coated through a slot die coater on the moving woven glass fabric. Calendaring was used to facilitate the spread of molten resin and achieve uniformly coated fabric. The speed of the moving fabric and the temperature and pressure of calendar rollers were adjusted, such that minimal impregnation was achieved in the coated fabric, and the resulting prepreg remained flexible.

Where a range of values is provided, it is understood that each intervening value, to the tenth of the unit of the lower limit unless the context clearly dictates otherwise, between the upper and lower limits of that range is also specifically disclosed. Each smaller range between any stated value or intervening value in a stated range and any other stated or intervening value in that stated range is encompassed. The upper and lower limits of these smaller ranges may independently be included or excluded in the range, and each range where either, neither, or both limits are included in the smaller ranges is also encompassed within the invention, subject to any specifically excluded limit in the stated range. Where the stated range includes one or both of the limits, ranges excluding either or both of those included limits are also included.

As used herein and in the appended claims, the singular forms "a", "an", and "the" include plural referents unless the context clearly dictates otherwise. Thus, for example, reference to "a method" includes a plurality of such methods and reference to "the glass fiber" includes reference to one or more glass fibers and equivalents thereof known to those skilled in the art, and so forth. The invention has now been described in detail for the purposes of clarity and understanding. However, it will be appreciated that certain changes and modifications may be practice within the scope of the appended claims.

Also, the words "comprise," "comprising," "include," "including," and "includes" when used in this specification and in the following claims are intended to specify the presence of stated features, integers, components, or steps, but they do not preclude the presence or addition of one or more other features, integers, components, steps, acts, or groups.

## Claims

1. A flexible thermoplastic prepreg comprising:
(i) a woven cloth or fabric comprising a plurality of rovings that are woven together to form the woven cloth or fabric, the woven cloth or fabric having a first major surface and a second major surface border by a plurality of edges with the second major surface being positioned on an opposite side of the first major surface, wherein each roving contains a bundle of continuous glass fibers; and
(ii) a polymer resin that is partially impregnated within the woven cloth or fabric, the polymer resin being positioned atop the first major surface of the woven cloth or fabric and penetrating through the first surface and partially into an interior of the woven cloth or fabric such that between 40% and 80% of the continuous glass fibers remain substantially free of the polymer resin;
(iii) the polymer resin comprising a thermoplastic material such that when the woven cloth or fabric is subjected to a subsequent heating and/or pressure process, the polymer resin migrates within the woven cloth or fabric and fully impregnates the woven cloth or fabric by wetting or contacting substantially all of the continuous glass fibers.

2. The flexible thermoplastic prepreg of claim 1, further comprising an additional polymer resin that is partially impregnated within the woven cloth or fabric, the additional polymer resin being positioned atop and penetrating through the second major surface and partially into the interior of the woven cloth or fabric, wherein the continuous glass fibers of a middle layer of the woven cloth or fabric that is disposed between the first major surface and the second major surface remain substantially free of the polymer resin, the middle layer being of the same shape and size as the first major surface and the second major surface.

3. The flexible thermoplastic prepreg of claim 2, wherein the 40% to 80% of the continuous glass fibers that remain substantially free of the polymer resin are disposed within the middle layer.

4. The flexible thermoplastic prepreg of claim 2, wherein the additional polymer resin penetrates through the second major surface and into the interior of the woven cloth or fabric by an amount that differs from the amount that the polymer resin penetrates through the first major surface and into the interior of the woven cloth or fabric.

5. The flexible thermoplastic prepreg of claim 1, wherein the polymer resin is only positioned atop the first major surface of the woven cloth or fabric.

6. The flexible thermoplastic prepreg as claimed in one or more of claims 1 to 5,
wherein the polymer resin comprises polyolefins, polyamides, polyesters, polycarbonates, polyketones, polyimides, polyethers, polysulfides, thermoplastic polyurethanes, polyacetals, polyacrylates, polymethacrylates, and polyvinyl chloride.

7. The flexible thermoplastic prepreg as claimed in one or more of claims 1 to 6,
wherein the woven cloth or fabric comprises one or more weaves selected from the group consisting of: plain weaves, twill weaves, satin weaves, multiaxial weaves, and stitched weaves.

8. The flexible thermoplastic prepreg as claimed in one or more of claims 1 to 7,
wherein the continuous glass fibers are sized with a coupling agent that promotes bonding between the polymer resin and the continuous glass fibers, preferably the coupling agent includes a blocked isocyanate coupling compound having a silicon-containing moiety and a blocked isocyanate moiety.

9. A composite product made via a compression molding process wherein a plurality of flexible thermoplastic prepregs as claimed in one or more of claims 1 to 7 are stacked atop one another within a mold and subjected to a heating and/or pressure process to melt the polymer resin of the respective flexible thermoplastic prepregs and cause the polymer resin to fully penetrate into the interior of the respective flexible thermoplastic prepregs, the stack of flexible thermoplastic prepregs conforming to the shape of the mold and being further subjected to a cooling process to form a molded composite part in the shape of the mold or die.

10. A flexible thermoplastic prepreg comprising:
(i) a plurality of rovings that are woven together to form the woven cloth or fabric, the woven cloth or fabric having a first major surface and a second major surface border by a plurality of edges with the second major surface being positioned on an opposite side of the first major surface, wherein each roving contains a bundle of fibers; and
(ii) a polymer resin coating atop the first major surface of the woven cloth or fabric, wherein at least 30% of the fibers remain substantially free of or uncoated by the polymer resin;
(iii) the polymer resin comprising a thermoplastic material that melts or softens when exposed to a subsequent heating and/or pressure process so as to fully impregnate the woven cloth or fabric and thereby wet or coat substantially all of the fibers.

11. The flexible thermoplastic prepreg of claim 10, further comprising an additional polymer resin that is positioned atop the second major surface and partially impregnated within the woven cloth or fabric, the additional polymer resin penetrating through the second major surface and partially into the interior of the woven cloth or fabric such that a middle layer of the fibers remains substantially free of the polymer resin.

12. The flexible thermoplastic prepreg of claim 11, wherein the 30% to 90% of the fibers that remain substantially free of the polymer resin are disposed within the middle layer.

13. The flexible thermoplastic prepreg of claim 10, wherein the polymer resin is only positioned atop the first major surface of the woven cloth or fabric.

14. The flexible thermoplastic prepreg as claimed in one or more of claims 10 to 13,
wherein the polymer resin comprises polyolefins, polyamides, polyesters, polycarbonates, polyketones, polyimides, polyethers, polysulfides, thermoplastic polyurethanes, polyacetals, polyacrylates, polymethacrylates, and polyvinyl chloride.

15. The flexible thermoplastic prepreg as claimed in one or more of claims 10 to 14,
wherein the fibers comprise one or more fibers selected from the group consisting of: glass fibers, carbon fibers, basalt fibers, ceramic fibers, metal fibers, natural fibers, synthetic organic fibers, inorganic fibers, and aramid fibers.

16. The flexible thermoplastic prepreg as claimed in one or more of claims 10 to 15,
wherein the fibers are sized with a coupling agent that promotes bonding between the polymer resin and the fibers.

17. A method of forming a flexible thermoplastic prepreg comprising:
(i) providing a plurality of rovings, each roving containing a bundle of fibers;
(ii) weaving the plurality of rovings together to form a woven cloth or fabric having a first major surface and a second major surface border by a plurality of edges, the second major surface being positioned on an opposite side of the first major surface;
(iii) applying a polymer resin atop the first major surface of the woven cloth or fabric; and
(iv) applying heat and/or pressure to the polymer resin and the woven cloth or fabric to cause the polymer resin to penetrate through the first surface and partially into an interior of the woven cloth or fabric without saturating the woven cloth or fabric such that between 30% and 90% of the fibers remain substantially free of the polymer resin;
wherein the polymer resin comprises a thermoplastic material such that when the woven cloth or fabric is subjected to a subsequent heating and/or pressure process, the polymer resin melts and fully penetrates into the interior of the woven cloth or fabric and saturates the woven cloth or fabric so that substantially all of the fibers are wetted or coated by the polymer resin.

18. The method of claim 17, further comprising:
(i) stacking a plurality of flexible thermoplastic prepregs atop one another within a mold;
(ii) subjecting the stack of flexible thermoplastic prepregs to a heating and/or pressure process to melt the polymer resin of the respective flexible thermoplastic prepregs and cause the polymer resin to fully penetrate into the interior of the respective flexible thermoplastic prepregs, wherein the stack of flexible thermoplastic prepregs conforms to the shape of the mold; and
(iii) cooling the consolidated composite to thereby form a molded composite part in the shape of the mold.

19. The method of claim 18, wherein the subsequent heating and/or pressure process comprises a compression molding process.

20. The method of claim 17, wherein applying the polymer resin atop the first major surface of the woven cloth or fabric comprises extruding a liquid polymer resin atop the first major surface.

21. The method of claim 17, wherein applying the polymer resin atop the first major surface of the woven cloth or fabric comprises positioning a polymer film sheet atop the first major surface.

22. The method of claim 17, further comprising:
(i) applying an additional polymer resin atop the second major surface of the woven cloth or fabric; and
(ii) applying heat and/or pressure to the additional polymer resin and the woven cloth or fabric to cause the additional polymer resin to penetrate through the second major surface and partially into the interior of the woven cloth or fabric without saturating the woven cloth or fabric.

23. The method of claim 22, wherein heat and/or pressure is applied to the polymer resin, the woven cloth or fabric, and the additional layer so that a middle layer of the woven cloth or fabric that is disposed between the first major surface and the second major surface remains substantially free of the polymer resin, the middle layer being substantially the same shape and size as the first major surface and the second major surface.

24. The method as claimed in one or more of claims 17 to 23, further comprising sizing the fibers with a coupling agent that promotes bonding between the polymer resin and the fibers.
